(19) Europäisches Patentamt
European Patent Office
Office européen des brevets

(11) Veröffentlichungsnummer: **0 490 197 A1**

(12) **EUROPÄISCHE PATENTANMELDUNG**

(21) Anmeldenummer: **91120612.6**

(22) Anmeldetag: **29.11.91**

(51) Int. Cl.5: **C09B 57/00**, G11B 7/24, C07C 253/30

(30) Priorität: **11.12.90 DE 4039437**

(43) Veröffentlichungstag der Anmeldung: **17.06.92 Patentblatt 92/25**

(84) Benannte Vertragsstaaten: **CH DE FR GB IT LI**

(71) Anmelder: **BASF Aktiengesellschaft**
**Carl-Bosch-Strasse 38**
**W-6700 Ludwigshafen(DE)**

(72) Erfinder: **Schmitt, Michael, Dr.**
**Freudenbergstrasse 18**
**W-6940 Weinheim(DE)**
Erfinder: **Albert, Bernhard, Dr.**
**Rietburgstrasse 13**
**W-6701 Maxdorf(DE)**
Erfinder: **Brosius, Sibylle, Dr.**
**Cordovastrasse 29**
**W-6700 Ludwigshafen(DE)**
Erfinder: **Schomann, Klaus Dieter, Dr.**
**Kopernikusstrasse 47**
**W-6700 Ludwigshafen(DE)**
Erfinder: **Kuppelmaier, Harald, Dr.**
**In den Bannzaeunen 17**
**W-6701 Goennheim(DE)**

(54) **Azulenquadratsäurefarbstoffe.**

(57) Azulenquadratsäurefarbstoffe der allgemeinen Formel I

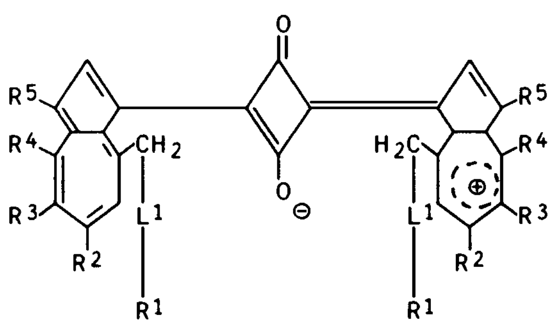

I

mit folgender Bedeutung der Variablen:

| | |
|---|---|
| $L^1$ | $C_1$-$C_{12}$-Alkylengruppen, die durch Phenyl substituiert sein können; |
| $R^1$ | Reste |
| | -$CN_1$ -NH-CO-$OR^6$, -NH-CO-NH-$R^6$, -NH-$SO_2$-$R^6$ oder -NH-CO-$R^7$ |
| | mit |
| $R^6$ | $C_1$-$C_{12}$-Alkyl, $C_2$-$C_{12}$-Alkenyl, $C_5$-$C_7$-Cycloalkyl oder Phenyl, das durch $C_1$-$C_4$-Alkyl, $C_1$-$C_4$-Alkoxy oder Halogen substituiert sein kann; |
| $R^7$ | einer der Reste $R^6$ oder einer der Reste |
| | -$L^2$-CO-$OR^{6'}$, -$L^2$-CO-NH-$R^{6'}$ oder -$L^2$-O-CO-NH-$R^{6'}$ |
| | mit |
| $L^2$ | $C_1$-$C_{12}$-Alkylgruppen und |
| $R^{6'}$ | einer der Alkylreste $R^6$; |
| $R^2$, $R^3$, $R^4$ und $R^5$ | gleich oder verschieden und unabhängig voneinander Wasserstoff oder $C_1$-$C_{12}$-Alkyl; |

EP 0 490 197 A1

mit der Maßgabe, daß die Ringpositionen der Substituenten $-CH_2-L^1-R^1$ und $R^4$ gegeneinander vertauscht sein können, wenn $R^5$ Wasserstoff bedeutet,
sowie Vorprodukte zur Herstellung der Farbstoffe I und optische Aufzeichnungsmedien für die Aufzeichnung und Wiedergabe von Informationen mittels Laserstrahlen, die in der lichtempfindlichen Schicht einen Azulenquadratsäurefarbstoff I enthalten.

Die vorliegende Erfindung betrifft neue Azulenquadratsäurefarbstoffe der allgemeinen Formel I

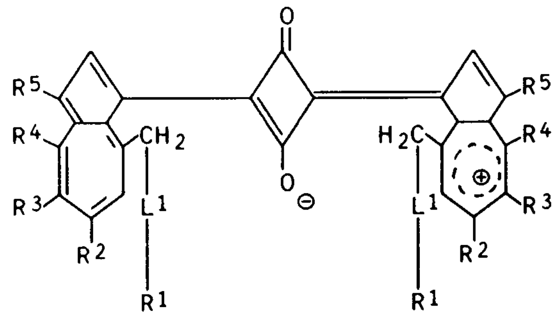

I

in der

| | |
|---|---|
| $L^1$ | $C_1$-$C_{12}$-Alkylengruppen, die durch Phenyl substituiert sein können, bedeutet; |
| $R^1$ | für Reste der Formeln<br>-CN, -NH-CO-$OR^6$, -NH-CO-NH-$R^6$, -NH-$SO_2$-$R^6$ oder -NH-CO-$R^7$<br>steht, wobei |
| $R^6$ | $C_1$-$C_{12}$-Alkyl, $C_2$-$C_{12}$-Alkenyl, $C_5$-$_6$$_7$-Cycloalkyl oder Phenyl, das durch $C_1$-$C_4$-Alkyl, $C_1$-$C_4$-Alkoxy oder Halogen substituiert sein kann, bedeutet und |
| $R^7$ | für einen der Reste $R^6$ oder einen der Reste der Formeln<br>-$L^2$-CO-$OR^{6'}$, -$L^2$-CO-NH-$R^{6'}$ oder -$L^2$-O-CO-NH-$R^{6'}$<br>steht, wobei |
| $L^2$ | $C_1$-$C_{12}$-Alkylengruppen bedeutet und |
| $R^{6'}$ | einen der Alkylreste $R^6$ bezeichnet; |
| $R^2$, $R^3$, $R^4$ und $R^5$ | gleich oder verschieden sind und unabhängig voneinander jeweils für Wasserstoff oder $C_1$-$C_{12}$-Alkylgruppen stehen, die folgende Substituenten tragen können: Halogen, Cyano, $C_1$-$C_{12}$-Alkoxy, $C_1$-$C_{12}$-Alkoxycarbonyl oder Phenyl, das durch $C_1$-$C_4$-Alkyl, $C_1$-$C_4$-Alkoxy oder Halogen substituiert sein kann, |

mit der Maßgabe, daß die Ringpositionen der Substituenten -$CH_2$-$L^1$-$R^1$ und $R^4$ gegeneinander vertauscht sein können, wenn $R^5$ Wasserstoff bedeutet,

sowie Vorprodukte zur Herstellung der Farbstoffe I und optische Aufzeichnungsmedien, welche die Farbstoffe I enthalten.

Zur kostengünstigen Herstellung optischer Datenaufzeichnungsträger werden Farbstoffe mit besonderen Eigenschaften benötigt. Diese Farbstoffe sollten

- eine starke Absorption zwischen 700 und 900 nm aufweisen, um mit Halbleiterlasern beschreibbare Schichten zu liefern,
- in der Schicht eine hohe Reflektivität im nahen Infrarot (700 bis 900 nm) aufweisen, um mit einem einfachen Schichtaufbau (ohne Reflektorschicht) auszukommen,
- eine hohe Löslichkeit aufweisen, um beispielsweise die dünne Speicherschicht durch Spincoating auf einen Träger aufbringen zu können und
- in dünnen Schichten eine hohe Stabilität

aufweisen.

Aus der älteren deutschen Patentanmeldung P 39 35 526.8 und der DE-A-38 16 068 sind Farbstoffe auf der Basis von Azulenquadratsäure bekannt, die in optischen Aufzeichnungsmedien eingesetzt werden und sich von den Verbindungen I durch die Art der Verknüpfung des Restes $R^1$ an die Alkylengruppe $L^1$ unterscheiden.

Der Erfindung lag die Aufgabe zugrunde, für optische Aufzeichnungsmedien geeignete Farbstoffe zu finden, die dem geforderten Eigenschaftsprofil besonders nahekommen.

Demgemäß wurden die eingangs definierten Azulenquadratsäurefarbstoffe I gefunden.

Weiterhin wurden bevorzugte Farbstoffe der Formel I gefunden, in der $R^2$, $R^3$, $R^4$ und $R^5$ jeweils $C_1$-$C_6$-Alkyl oder Wasserstoff oder $R^2$ und $R^4$ Methyl und $R^3$ und $R^5$ Wasserstoff oder $R^2$ und $R^4$ Wasserstoff, $R^3$ Isopropyl und $R^5$ Methyl bedeuten.

Außerdem wurden optische Aufzeichnungsmedien für die Aufzeichnung und Wiedergabe von Informationen mittels Laserstrahlen gefunden, welche die Azulenquadratsäurefarbstoffe I in der gegen Laserlicht empfindlichen Schicht enthalten.

Weiterhin wurden als Vorprodukte zur Herstellung der Farbstoffe I Azulene der Formel II

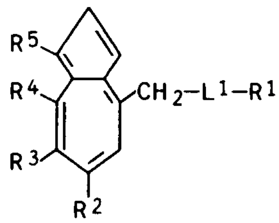

II

mit der eingangs definierten Bedeutung der Variablen gefunden.

Geeignete Alkylengruppen $L^1$ sind beispielsweise 1,2-, 1,3-, 1,4-, 1,5-, 2,3- und 2,4-Pentylen, Hexamethylen, Heptamethylen, Octamethylen, Nonamethylen, Decamethylen, Undecamethylen, Dodecamethylen und verzweigte Reste dieser Art, besonders Methylen, Ethylen, 1,2-Propylen, 1,2-, 1,3- und 2,3-Butylen sowie ganz besonders 1,3-Propylen und 1,4-Butylen.

Von den definitionsgemäßen Resten $R^1$ sind solche der Formeln $-NH-CO-OR^6$ und $-NH-SO_2-R^6$ bevorzugt und solche der Formel $-NH-CO-R^7$ besonders bevorzugt.

Dabei eignen sich folgende Gruppen als Rest $R^6$:

- $C_1$-$C_{12}$-Alkylgruppen wie Methyl, Ethyl, Propyl, Isopropyl, Butyl, Isobutyl, sec.-Butyl, tert.-Butyl, Pentyl, Isopentyl, sec.-Pentyl, tert.-Pentyl, Hexyl, 2-Methylpentyl, Heptyl, Octyl, 2-Ethylhexyl, Nonyl, Decyl, Undecyl, Dodecyl und verzweigte Reste dieser Art, wobei die Alkylgruppen mit bis zu 8 C-Atomen bevorzugt und diejenigen mit bis zu 4 C-Atomen besonders bevorzugt sind;
- $C_2$-$C_{12}$-Alkenylgruppen wie Ethenyl, 1- und 2-Propenyl, 1-, 2- und 3-Butenyl, 1,3-Butadienyl, 1-, 2-, 3- und 4-Pentenyl und 1,3-, 1,4-und 2,4-Pentadienyl;
- $C_5$-$C_7$-Cycloalkylgruppen wie Cyclopentyl, Cyclohexyl und Cycloheptyl;
- eine Phenylgruppe, die vorzugsweise unsubstituiert ist, aber auch $C_1$-$C_4$-Alkyl, $C_1$-$C_4$-Alkoxy oder Halogen, wie vor allem Fluor, Chlor und Brom, als Substituenten tragen kann; beispielsweise seien genannt: 4-Methyl-, 3,4- und 2,5-Dimethyl-, 2,4,6-Trimethyl-, 4-Methoxy- und 4-Chlorphenyl.

Geeignete Reste $R^7$ weisen die Formeln $-L^2-CO-OR^{6'}$, $-L^2-CO-NH-R^{6'}$ oder $-L^2-O-CO-NH-R^{6'}$ auf. Beispiele für die Gruppen $L^2$ sind dabei die oben aufgeführten $C_1$-$C_{12}$-Alkylengruppen $L^1$ und für den Rest $R^{6'}$ die oben genannten $C_1$-$C_{12}$-Alkylreste $R^6$. Bevorzugte Gruppen $L^2$ und $R^{6'}$ enthalten jeweils bis zu 6 C-Atome, besonders bevorzugte jeweils bis zu 4 C-Atome. Reste $R^7$ sind beispielsweise:
$-(CH_2)_2-CO-O-CH_3$, $-(CH_2)_3-CO-O-C_2H_5$, $-CH(CH_3)-CH(CH_3)-CO-O-C_3H_7$,
$-(CH_2)_2-CO-O-CH(CH_3)_2$, $-(CH_2)_2-CO-O-C_4H_9$ und $-(CH_2)_2-CO-O-C(CH_3)_3$;
$-CH(CH_3)-CH(CH_3)-CO-NH-CH_3$, $-(CH_2)_4-CO-NH-C_2H_5$, $-(CH_2)_3-CO-NH-C_3H_7$,
$-(CH_2)_2-CO-NH-CH(CH_3)_2$, $-(CH_2)_2-CO-NH-C_4H_9$ und $-(CH_2)_2-CO-NH-C(CH_3)_3$;
$-(CH_2)_4-O-CO-NH-CH_3$, $-(CH_2)_3-O-CO-NH-C_2H_5$, $-(CH_2)_3-O-CO-NH-C_3H_7$,
$-(CH_2)_3-O-CO-NH-CH(CH_3)_2$, $-(CH_2)_3-O-CO-NH-C_4H_9$ und
$-(CH_2)_3-O-CO-NH-C(CH_3)_3$.

Geeignete Reste $R^2$, $R^3$, $R^4$ oder $R^5$ sind die für $R^6$ aufgeführten Alkylgruppen, die vorzugsweise unsubstituiert sind, aber auch Halogen, Cyano, $C_1$-$C_{12}$-Alkoxy, $C_1$-$C_{12}$-Alkoxycarbonyl oder Phenyl als Substituenten tragen können, z.B.:

- Fluor-, Chlor-, Difluor-, Trifluor- und Trichlormethyl, 2-Fluor-, 2-Chlor-, 2-Brom- und 1,1,1-Trifluorethyl, Heptafluorpropyl, 4-Chlorbutyl, 5-Fluorpentyl und 6-Chlorhexyl;
- Cyanomethyl, 2-Cyanoethyl, 3-Cyanopropyl, 2- und 4-Cyanobutyl, 5-Cyanopentyl und 6-Cyanohexyl;
- 2-Methoxy-, 2-Ethoxy-, 2-Propoxy-, 2-Isopropoxy- und 2-Butoxyethyl, 2- und 3-Methoxy- und 3-Ethoxypropyl, 4-Methoxy-, 4-Ethoxy-, 4-Propoxy- und 4-Isopropoxybutyl, 5-Ethoxypentyl und 6-Methoxyhexyl;
- Methoxycarbonyl- und Ethoxycarbonylmethyl, 2-Methoxycarbonyl- und 2-Ethoxycarbonylethyl, 3-Methoxycarbonyl- und 3-Ethoxycarbonylpropyl, 4-Methoxycarbonyl- und 4-Ethoxycarbonylbutyl, 5-Methoxycarbonyl- und 5-Ethoxycarbonylpentyl, 6-Methoxycarbonyl- und 6-Ethoxycarbonylhexyl;
- Benzyl, 4-Methoxy- und 4-Chlorbenzyl, 1- und 2-Phenylethyl und 2-(4-Methylphenyl)ethyl.

Bevorzugt sind Azulenquadratsäurefarbstoffe der Formel I, in der $R^2$, $R^3$, $R^4$ und $R^5$ jeweils $C_1$-$C_6$-Alkyl oder Wasserstoff bedeuten.

Besonders bevorzugt sind Farbstoffe der Formel I, in der $R^2$ und $R^4$ für Methyl und $R^3$ und $R^5$ für Wasserstoff stehen.

Ganz besonders bevorzugt sind Farbstoffe der Formel I, in der $R^2$ und $R^4$ Wasserstoff, $R^3$ Isopropyl und $R^5$ Methyl bedeuten.

Die erfindungsgemäßen Azulenquadratsäurefarbstoffe I lassen sich durch Umsetzung der Azulene II mit

Quadratsäure (III) herstellen:

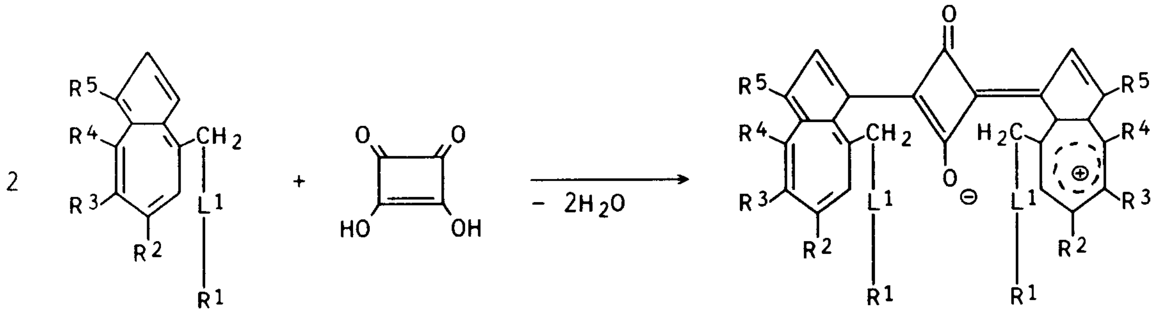


(II) (III) (I)

Bei Azulenen der Formel II, in der $R^5$ Wasserstoff bedeutet, kann die Bindung zur Quadratsäure sowohl in Position 1 als auch in Position 3 des Fünfringes erfolgen, so daß isomere Produkte entstehen können, bei denen die Ringpositionen der Substituenten $-CH_2-L^1-R^1$ und $R^4$, wie oben aufgeführt, gegeneinander vertauscht sind. Die isomeren Verbindungen können chromatographisch getrennt werden. In den optischen Aufzeichnungsmedien werden jedoch üblicherweise die Isomerengemische eingesetzt.

Das Herstellverfahren ist an sich bekannt und beispielsweise in Angew. Chem. 78, S. 937 (1966) oder in der älteren deutschen Patentanmeldung P 37 33 173.6 beschrieben.

Ausgangsstoffe für die Herstellung der erfindungsgemäßen Azulene II sind Methylazulene der Formel IVa

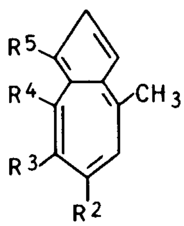

IVa

oder die aus der EP-A-310 080 bekannten Azulenalkohole der Formel IVb

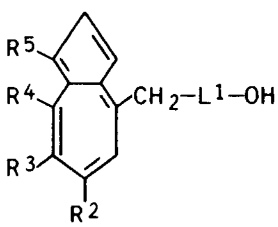

IVb

Die Verbindungen IVa werden durch Anionisierung mit Basen wie Lithiumdiisopropylamid, Butyllithium oder Kalium-tert.-butanolat und anschließende Cyanalkylierung mit Halogenverbindungen der Formel V

Hal-$L^{1'}$-CN V

in der Hal für Chlor, Brom oder Iod steht und $L^{1'}$ einen um eine $CH_2$-Gruppe verminderten Rest $L^1$ bedeutet, oder anschließende Addition an $\alpha,\beta$-ungesättigte Nitrile zu den erfindungsgemäßen Azulenalkylnitrilen IIa

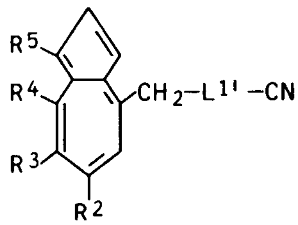

IIa

umgesetzt.

Im Fall der Verbindungen IVb können die Nitrile IIa beispielsweise durch Tosylierung mit p-Toluolsulfochlorid und anschließende Reaktion mit Natriumcyanid erhalten werden.

Die Azulenalkylnitrile IIa dienen ihrerseits als Ausgangsstoffe für die Herstellung aller weiteren erfindungsgemäßen Azulenderivate II. Dazu werden sie zunächst nach an sich bekannten Methoden, z.B. durch Reduktion mit Lithiumaluminiumhydrid, zu Azulenalkylaminen der Formel IIb ($-L^1- = -L^{1'}-CH_2-$)

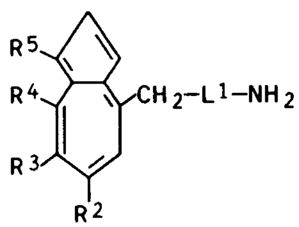

IIb

umgesetzt, die dann durch Reaktion mit Carbonsäurederivaten oder organischen Sulfonsäurederivaten der Formeln VIa bis VIc

$Y-CO-R^6$; $Y-CO-OR^6$; $Y-CO-NH-R^6$ VIa

$R^6-CO-O-CO-R^6$; $R^6O-CO-O-CO-OR^6$ VIb

$Y-SO_2-R^6$ VIc

in denen Y Chlor, Brom oder $C_1$-$C_4$-Alkoxy bedeutet, nach an sich bekannten Methoden die Azulene der Formel II'

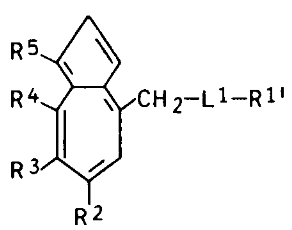

II'

in der $R^{1'}$ einen der Reste $-NH-CO-R^6$, $-NH-CO-OR^6$, $-NH-CO-NH-R^6$ oder $-NH-SO_2-R^6$ bedeutet, ergeben.

Die Umsetzung des Azulenalkylamins IIb mit dem in der Regel im Überschuß eingesetzten Säurehalogenid oder Ester VIa oder VIc oder Säureanhydrid VIb wird zweckmäßigerweise in einem inerten organischen Lösungsmittel wie Dichlormethan, 1,1,1- oder 1,1,2-Trichlorethan, Toluol, Ligroin oder Cyclohexan vorzugsweise unter Zusatz einer Base wie Trialkylamin oder Pyridin als Katalysator bei Temperaturen von -20 bis 80 °C durchgeführt.

Azulenalkylharnstoffderivate II' ($R^{1'} = -NH-CO-NH-R^6$) sind auch durch Umsetzung der Azulenalkylamine IIb mit einem den Rest $R^6$ enthaltenden Alkylisocyanat unter analogen Bedingungen wie oben erhältlich.

Weitere geeignete Methoden zur Herstellung von Azulenen IIc aus Azulenalkylaminen IIb sind in Houben-Weyl, Methoden der Organischen Chemie, 4. Aufl., Bd. E4, S. 149-166, S. 338-342, S. 352-364 (1983), Bd. E5, S. 941-1045 (1985) beschrieben.

Azulene der Formel II"

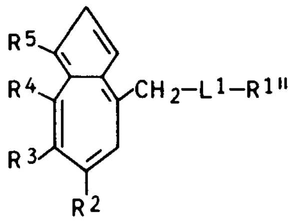

II"

in der $R^{1''}$ einen der Reste -NH-CO-$L^2$-O-CO-NH-$R^{6'}$, -NH-CO-$L^2$-CO-O$R^{6'}$ oder -NH-CO-$L^2$-CO-NH-$R^{6'}$ bedeutet, können folgendermaßen erhalten werden:

Werden die Azulenalkylamine IIb mit cyclischen Estern (Lactonen) der Formel VIc

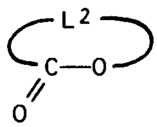

VIc

umgesetzt, dann entstehen Azulenderivate mit freier Hydroxylgruppe, die nach bekannten Methoden in Urethanderivate II" ($R^{1''}$=-NH-CO-$L^2$-O-CO-NH-$R^{6'}$ ) überführt werden können (z.B. Houben-Weyl, Methoden der Organischen Chemie, 4. Auf., Bd. E4, S. 181-189 (1983)).

Bei der Reaktion der Azulenalkylamine IIb mit cyclischen Carbonsäureanhydriden der Formel VId

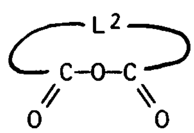

VId

entstehen Azulenderivate mit freier Carboxylgruppe, die nach bekannten Methoden zu den entsprechenden Estern II" ($R^{1''}$ = -NH-CO-$L^2$-CO-O$R^{6'}$ ) oder Amiden II" ($R^{1''}$ = -NH-CO-$L^2$-CO-NH-$R^{6'}$ ) umgesetzt werden können (z.B. Houben-Weyl, Methoden der Organischen Chemie, 4. Aufl., Bd. E5, S. 659-715 (1985) und Bd. E5, S. 941-1045 (1985)).

Die erfindungsgemäßen Azulenquadratsäurefarbstoffe I weisen hohe Absorption im Wellenlängenbereich von 760 bis 780 nm auf. Darüber hinaus neigen sie nicht zur Rekristallisation, so daß sie auch zu stabilen reinen Farbstoffschichten verarbeitet werden können, denen kein polymeres Bindemittel zugesetzt werden muß. Außerdem ist ihre Lichtechtheit so groß, daß der Zusatz von Stabilisatoren auf ein Minimum begrenzt werden kann. Von besonderem Vorteil ist auch ihre gute Löslichkeit in den meisten organischen Lösungsmitteln, so daß die Farbstoffe I direkt ohne Schutzschicht auf Träger aus strukturierten Kunststoffen aufgeschleudert werden können.

Die erfindungsgemäßen optischen Aufzeichnungsmedien bestehen aus einem Träger mit einer dünnen lichtabsorbierenden Schicht, die neben einem Farbstoff I auch Bindemittel enthalten kann.

Als Träger kommen zweckmäßig transparente Träger wie Glas oder Kunststoffe in Betracht. Geeignete Kunststoffe sind beispielsweise Polyester, Epoxide, Polyolefine (z.B. Polymethylpenten), Polyamide, Polyvinylchlorid, Polystyrol und Polyvinylester, besonders Polyacrylate und Polymethacrylate sowie ganz besonders Polycarbonate.

Die lichtabsorbierende Schicht wird zweckmäßigerweise durch Aufschleudern einer Lösung eines erfindungsgemäßen Azulenquadratsäurefarbstoffs I, die zusätzlich Bindemittel und weitere Additive wie Antioxidantien, Singulett-Sauerstoff-Quencher und UV-Absorber enthalten kann und in der Regel einen Farbstoffgehalt von 1 bis 30 Gew.-% aufweist, auf den Träger aufgebracht und getrocknet.

Geeignete Lösungsmittel sind dabei z.B. Propanol, Isopropanol, Butanol, Diacetonalkohol, Methylethylketon, Toluol, Bromoform, 1,1,2-Trichlorethan und deren Mischungen.

Der Zusatz von Bindemitteln ist nicht unbedingt erforderlich, wird aber dennoch bevorzugt, um die Viskosität der aufzuschleudernden Lösung optimal einstellen zu können und um eine gute Langzeitstabilität

der Aufzeichnungsmedien zu gewährleisten. Vorzugsweise werden 1 bis 50 Gew.-% Bindemittel, bezogen auf den Gehalt an gelöstem Feststoff, zugesetzt.

Als Bindemittel kommen z.B. Polyorganosiloxane, Epoxide, Polyacrylate und -methacrylate, Polystyrolhomo- und copolymerisate, Polyvinylcarbazol, Polyvinylpyrrolidon, Polyimidazolcopolymere, Polyvinylestercopolymere, Polyvinylethercopolymere, Polyvinylidenchloridcopolymere, Acrylnitrilcopolymere, Polyvinylchlorid und dessen Copolymere, Celluloseacetat und Nitrocellulose in Betracht. Bevorzugt sind Bindemittel auf der Basis von Vinylpyrrolidon-Vinylacetat-Copolymeren und Polyvinylchlorid-Polyvinylether-Copolymeren.

In der Regel werden der Farbstofflösung von den oben genannten Additiven bis zu 10 Gew.-%, vorzugsweise bis zu 5 Gew.-%, bezogen auf den Gehalt an gelöstem Feststoff, zugesetzt. Von Antioxidantien, die ebenfalls im nahen Infrarot absorbieren, beispielsweise Nickelthiolenkomplexe, wie sie in der DE-A-35 05 750, DE-A-35 05 751 oder in Dyes and Pigments, Bd. 8, S. 381-388 (1987) beschrieben sind, können vorzugsweise bis zu 10 Gew.-%, bezogen auf den Gehalt der aufzuschleudernden Lösung an gelöstem Feststoff, in der Lösung enthalten sein.

Unter Aufschleudern ist dabei das Aufbringen der Lösung auf den in Rotation befindlichen Träger, der zweckmäßig eine runde Form aufweist, zu verstehen. Es ist aber auch möglich, die Lösung auf den zunächst ruhenden Träger aufzubringen und ihn anschließend in Rotation zu versetzen. Das Aufgeben auf den Träger erfolgt zweckmäßigerweise mit einer Spritze oder einer Kapillaren oder mittels einer mechanischen Pumpe.

Die Rotation des Trägers erfolgt im allgemeinen mit einer Geschwindigkeit von 5 bis 7000 U/min, vorzugsweise 500 bis 5000 U/min, wobei das Aufschleudern der Lösung zweckmäßig bei geringerer Drehzahl (ca. 500 bis 2000 U/min) und das daran anschließende Trockenschleudern bei höherer Drehzahl (ca. 5000 bis 7000 U/min) vorgenommen wird. Die Schichtdicke der gegenüber Laserlicht empfindlichen Schicht beträgt 40 bis 160 nm, vorzugsweise 80 bis 120 nm. Sie ist abhängig von der Drehzahl, von der Konzentration und der Viskosität der aufzuschleudernden Lösung sowie der Temperatur.

Bei den erfindungsgemäßen optischen Aufzeichnungsmedien liegt die gegenüber Laserlicht empfindliche Schicht in Form einer homogenen, dünnen, glatten Schicht vor, die eine hohe optische Qualität aufweist. So liegen die Reflektivitätswerte im allgemeinen in einem Bereich oberhalb von 12 %.

Die neuen Aufzeichnungsmedien sind ferner bei der Wellenlänge der verwendeten Laserlichtquelle hinreichend empfindlich, d.h. bei Einstrahlung von Lichtpulsen von wenigen nJ Energiegehalt, die auf Brennpunktdurchmesser von $\leq 1$ µm fokussiert sind, bilden sich Pits aus, wobei ein ausgezeichnetes Signal-Rausch-Verhalten erzielt wird.

Als Laserlichtquelle eignen sich wegen der geringen Größe des Bauelements, des geringen Energiebedarfs und der Möglichkeit der direkten Modulation der optischen Ausgangsleistung durch Modulation des elektrischen Antriebsstromes Festkörper-Injektionslaser, die im nahen Infrarot emittieren, vor allem der AlGaAs-Laser, der im Wellenlängenbereich zwischen etwa 750 und 900 nm arbeitet, besonders gut.

Beispiele

a) Herstellung von Azulenen II

a1) Herstellung von Azulenalkylnitrilen IIa

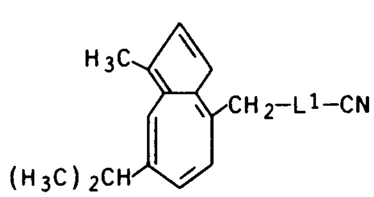

IIa

Beispiel 1

$L^1$: $-(CH_2)_2-$

Zu einer Lösung von 23,6 g (0,12 mol) 7-Isopropyl-1-methylazulen und 19,4 g (0,19 mol) Diisopropylamin in 350 ml Methyl-tert.-butylether (MTB) wurden bei 10 °C 100 ml Butyllithium-Lösung in Hexan (0,16 mol)

zugetropft. Nach einstündigem Rühren bei -5 ° C wurde eine Lösung von 20 g (0,15 mol) 3-Brompropionitril in 40 ml MTB bei -10 ° C langsam zugetropft. Anschließend wurde 12 h bei Raumtemperatur gerührt.

Dann wurde das Reaktionsgemisch mit 200 ml Wasser hydrolysiert und mit 2 N Schwefelsäure angesäuert. Die organische Phase wurde abgetrennt, mehrmals mit Wasser gewaschen und über Natriumsulfat getrocknet. Der nach Abziehen des Lösungsmittels verbleibende Rückstand wurde an Kieselgel chromatographiert (Ethylacetat/Petrolether 2:8 v/v).

Es wurden 13,7 g des Zielproduktes als hochviskoses blaues Öl erhalten (Ausbeute 46 %).

Physikalische Daten:

IR (Film): 2995, 2929, 2868 (CH); 2245 (CN); 1555, 1527, 1464, 1422, 1388, 1370, 784 $cm^{-1}$.-$^1$H-NMR ($CDCl_3$):$\delta$ = 1.45 (d, 6H); 2.14 (cm, 2H); 2.28 (m, 2H); 2.65 (s, 3H); 3.08 (sept., 1H); 3.25 (t, 2H); 6.95 (d, 1H); 7.25 (d, 1H); 7.40 (d, 1H); 7.64 (d, 1H); 8.20 (d, 1H) ppm.-$^{13}$C-NMR ($CDCl_3$):$\delta$ = 12.80; 14.21; 17.04; 24.76; 26.90; 36.60; 38.29; 112.37; 119.32; 124.17; 125.83; 133.46; 135.10; 136.68; 136.98; 137.33; 140.45; 145,75 ppm.- MS: m/e = 251,4 ($C_{18}H_{21}N^{\oplus}$).-

Beispiel 2

$L^1$: $-(CH_2)_3-$

Herstellung und Isolierung erfolgten analog zu Beispiel 1.

Physikalische Daten:

IR(KBr): 2959, 2930, 2867 (C-H); 2250 (C≡N); 1551, 1527; 1462, 1439, 1422, 1388, 1371 $cm^{-1}$; MS: m/e = 265,4 ($C_{19}H_{23}N^{\oplus}$). -

Beispiel 3

$L^1$: $-(CH_2)-CH(CH_3)-$

Eine Lösung von 9,9 g (0,05 mol) 7-Isopropyl-1-methylazulen in 200 ml Toluol wurde mit 5,6 g (0,05 mol) Kalium-tert.-butanolat versetzt und zum Sieden erhitzt. Dann wurden innerhalb von 3 h 4,7 g (0,07 mol) α-Methylacrylnitril zugetropft.

Die Isolierung des Produktes nach dem Abkühlen wurde analog zu Beispiel 1 durchgeführt.

Es wurden 1,7 g des Zielproduktes als hochviskoses blaues Öl erhalten (Ausbeute 13 %).

Physikalische Daten:

IR (Film): 2995, 2928, 2867 (CH); 2440 (CN); 1555, 1527, 1462, 1422, 1388, 1023, 783 $cm^{-1}$.-$^1$H-NMR ($CDCl_3$):$\delta$ = 1.48 (m, 9H); 2.10 (cm, 1H); 2.20 (m, 1H); 2.65 (s, 3H); 3.08 (cm, 1H); 3.25 (m, 1H); 3.40 (m, 1H); 6.95 (d, 1H); 7.30 (d, 1H); 7.40 (d, 1H); 7.65 (d, 1H); 8.20 (d, 1H) ppm.-$^{13}$C-NMR ($CDCl_3$): $\delta$ = 12.83; 24.70 (2C); 25.74; 35.52; 35.65; 38.32; 112.32; 122.68; 124.28; 125.78; 133.48; 135.19; 136.64; 137.18; 140.41; 146.29 ppm.- MS: m/e = 279,4 ($C_{20}H_{25}N^{\oplus}$). -

a2) Herstellung von Azulenalkylaminen IIb

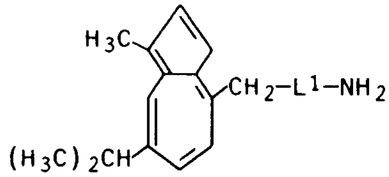

IIb

Beispiel 4

$L^1$: $-(CH_2)_3-$

Zu einer Lösung von 13,7 g (0,055 mol) 4-(7-Isopropyl-1-methylazulen-4-yl)-butyronitril (Beispiel 1) in 100 ml Diethylether wurde eine Suspension von 4,5 g Lithiumaluminiumhydrid in 50 ml Diethylether bei Raumtemperatur zugetropft. Dann wurde 1,5 h unter Rückfluß erhitzt.

Nach dem Abkühlen wurde das Reaktionsgemisch mit 20 ml Wasser hydrolysiert. Vom Niederschlag wurde abfiltriert, und das Filtrat wurde mit 2 N Salzsäure extrahiert. Die wäßrige Phase wurde abgetrennt und mit Natronlauge alkalisch gestellt. Durch Ausschütteln mit Methyl-tert.-butylether wurde die organische

Phase abgetrennt und dann über Natriumsulfat getrocknet. Danach wurde das Lösungsmittel abgezogen.

Es wurden 11,9 g des Zielproduktes als viskoses blaues Öl erhalten (Ausbeute 85 %). Das Produkt war $^{1}$H-NMR-spektroskopisch rein und wurde direkt zur Herstellung der weiteren Azulenderivate II eingesetzt.

Physikalische Daten:

IR (KBr): 3500 (N-H); 2959, 2925, 2865 (C-H); 1623, 1606, 1552, 1462, 1386 $cm^{-1}$. -$^{1}$H-NMR ($CDCl_3$): $\delta$ = 1,32 (2s, 6H); 1,95 (bs, 4H); 2,60 (S, 3H); 3,05 (m, 5H); 6,92 (d, 1H); 7,22 (d, 1H); 7,35 (d, 1H); 7,55 (d, 1H), 7,72 (bs, 2H); 8,12 (S, 1H) ppm. -$^{13}$C-NMR ($CDCl_3$): $\delta$ = 12,84, 24,69 (2c); 28,15; 28,23; 37,43; 38,20; 39,96; 112,32; 124,38; 125,33; 133,19; 135,23; 136,34; 136,57; 137,19; 139,94; 147,76 ppm.- MS: m/e = 255,4 ($C_{18}H_{25}N^{\oplus}$).-

Beispiel 5

$L^1$: $-(CH_2)_4-$

Herstellung und Isolierung erfolgten analog zu Beispiel 4.

Physikalische Daten:

IR (Film): 3380 (NH); 2957, 2929, 2863 (C-H); 1554, 1526, 1463, 1387, 1369, 1314 $cm^{-1}$. -MS: m/e = 269,4 ($C_{19}H_{27}N^{\oplus}$). -

a3) Herstellung von Azulenen IIc

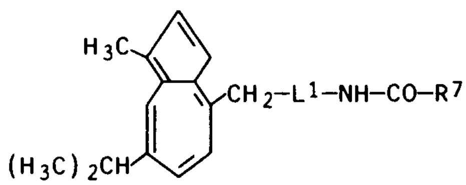

IIc

Beispiel 6

$L^1$: $-(CH_2)_3-$; $R^7$: $-CH_3$

Zu einer Lösung von 4,0 g (0,048 mol) Acetylchlorid und 3,8 g (0,048 mol) Pyridin in 50 ml Dichlormethan wurden 10,2 g (0,04 mol) 4-(7-Isopropyl-1-methylazulen-4-yl)butylamin (Beispiel 4) in 50 ml Dichlormethan zugetropft. Die Mischung wurde dann 12 h gerührt.

Anschließend wurde nach Ausschütteln mit 2 N Salzsäure die organische Phase abgetrennt, mit Wasser gewaschen und über Natriumsulfat getrocknet. Der nach Abziehen des Lösungsmittels verbleibende Rückstand wurde an Kieselgel chromatographiert (Dichlormethan/Aceton 8:2 v/v).

Es wurden 7,8 g des Zielproduktes als blaues Öl erhalten (Ausbeute 66 %).

Physikalische Daten:

IR (Film): 3480, 3100 (N-H); 1651 (C=O); 1554, 1527, 1463, 1437, 1387, 1367 $cm^{-1}$.- $^{1}$H-NMR ($CDCl_3$): $\delta$ = 1,35 (25, 6H); 1,60 (cm, 2H); 1,85 (cm, 2H); 1,90 (S, 3H); 2,68 (S, 3H); 3,08 (cm, 1H); 3,15 (cm, 2H); 2,23 (cm, 2H); 5,68 (bs, 1H); 6,95 (d, 1H); 7,23 (d, 1H); 7,40 (d, 1H); 7,60 (d, 1H); 8,18 (s, 1H) ppm.- $^{13}$C-NMR ($CDCl_3$): $\delta$ = 12,86; 23,12; 24,71 (2C); 28,56; 29,90; 37,64; 38,23; 39,55; 112,29; 124,51; 125,32; 133,20; 135,17; 136,22; 136,40; 137,39; 139,89; 148,58; 170,06 ppm.- MS: m/e = 297,4 ($C_{20}H_{27}N0^{+}$).-

Beispiele 7 bis 11

Auf analoge Weise Zu Beispiel 6 wurden diese Azulene IIc durch Umsetzung der Azulenalkylamine IIb mit Carbonsäurehalogeniden VI hergestellt.

In Tabelle 1 sind die jeweiligen Azulene IIc und ihre massenspektrometrischen und IR-spektroskopischen Daten aufgeführt (dabei bedeutet Ph = Phenyl).

Tabelle 1

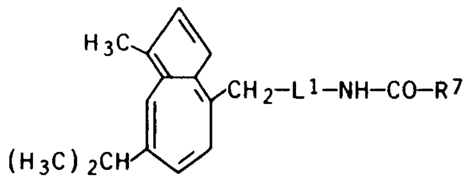

IIc

| Bsp. | $L^1$ | $R^7$ | MS [$M^{\oplus}$] | IR ($\tilde{\nu}$/cm$^{-1}$) [NH, C=O] |
|---|---|---|---|---|
| 7 | $-(CH_2)_3-$ | $-Ph$ | $C_{25}H_{29}NO$ 359.5 | 3320; 1638 |
| 8 | $-(CH_2)_3-$ | $-C_4H_9$ | $C_{23}H_{33}NO$ 339.5 | 3295;1643 |
| 9 | $-(CH_2)_3-$ | $-CH{=}CH{-}CH{=}CH{-}CH_3$ | $C_{24}H_{31}NO$ 349.5 | 3280;1659 |
| 10 | $-(CH_2)_3-$ | $-CH(CH_3)_3$ | $C_{23}H_{33}NO$ 339.5 | 3350; 1638, 1636, 1613 |
| 11 | $-(CH_2)_4-$ | $-CH_3$ | $C_{21}H_{29}NO$ 311.5 | 3400;1649 |

Beispiel 12

$L^1$: $-(CH_2)_3-$; $R^7$: $-(CH_2)_3-O-CO-NH-C(CH_3)_3$
Eine Lösung von 8,4 g (0,033 mol) 4-(7-Isopropyl-1-methylazulen-4-yl)-butylamin (Beispiel 4) und 3,4 g (0,04 mol) Butyrolacton in 60 ml Dichlormethan wurde mit 1,2 g (0,05 mol) Natriumhydrid versetzt und anschließend 2 h gerührt.

Dann wurde das Reaktionsgemisch mit 20 ml Wasser hydrolysiert. Nach Ausschütteln mit 2 N Salzsäure wurde die organische Phase abgetrennt, mit Wasser gewaschen und über Natriumsulfat getrocknet. Der nach dem Abziehen des Lösungsmittels verbleibende Rückstand wurde an Kieselgel chromatographiert (Dichlormethan/Methanol 9:1 v/v).

Es wurden 2,7 g (Ausbeute 24 %) der Verbindung 12a ($R^7$: $-(CH_2)_3-OH$) als blaues hochviskoses Öl erhalten, aus der durch Umsetzung mit tert.-Butylisocyanat die Verbindung 12 hergestellt wurde.
Physikalische Daten:
IR (KBr): 3300 (breit; NH, OH); 2957, 2930, 2866 (CH); 1645 (CO); 1554, 1527, 1463, 1439, 1387, 1369 cm$^{-1}$.- MS: m/e = 341,5 ($C_{22}H_{31}NO_2^{\oplus}$). -
Eine Lösung von 2,0 g (0,058 mol) der Verbindung 12a in 20 ml 1,1,1-Trichlorethan wurde mit 2 ml tert.-Butylisocyanat und einem Tropfen Dibutyldilaurylstannan versetzt und 1 h unter Rückfluß erhitzt.

Der nach dem Abziehen des Lösungsmittels verbleibende Rückstand wurde an Kieselgel chromatographiert (Methylenchlorid/Methanol 9:1 v/v).

Es wurden 1,8 g des Zielprodukts als blaues Öl erhalten (Ausbeute 70 %).

Beispiel 13

$L^1$: $-(CH_2)_3-$; $R^7$: $-(CH_2)_2-CO-O-C_4H_9$
Eine Lösung von 21,1 g (0,083 mol) 4-(7-Isopropyl-1-methylazulen-4-yl)-butylamin (Beispiel 4) in 100 ml

Dichlormethan wurde mit 10,0 g (0,1 mol) Bernsteinsäureanhydrid versetzt und 12 h gerührt.

Das Reaktionsgemisch wurde anschließend mehrmals mit Wasser ausgeschüttelt. Die organische Phase wurde abgetrennt und über Natriumsulfat getrocknet. Danach wurde das Lösungsmittel abgezogen.

Es wurden 17,4 g (Ausbeute 59 %) der Verbindung 13a ($R^7$: $-(CH_2)_2$-CO-OH) erhalten, aus der durch Veresterung die Verbindung 13 hergestellt wurde.

Physikalische Daten:

IR (Film): 3350 (breit, NH, OH); 1742 (CO); 1646 (CO) $cm^{-1}$.- MS:m/e = 355,5 ($C_{22}H_{29}NO_3^{\oplus}$).-

Eine Mischung aus 9,8 g (0,028 mol) der Verbindung 13a, 0,3 g N,N-Dimethylaminopyridin und 5,9 g (0,08 mol) n-Butanol in 30 ml Dichlormethan wurde bei 0 °C unter Rühren mit 6,9 g (0,034 mol) Dicyclohexylcarbodiimid versetzt und anschließend 2 h bei Raumtemperatur gerührt.

Vom Niederschlag wurde dann abfiltriert, und das Filtrat mit 2 N Salzsäure ausgeschüttelt. Die organische Phase wurde abgetrennt, mit Wasser gewaschen und über Natriumsulfat getrocknet. Der nach Abziehen des Lösungsmittels verbleibende Rückstand wurde an Kieselgel chromatographiert (Petrolether/Ethylacetat 1:1 v/v).

Es wurden 5,2 g des Zielproduktes als blaues hochviskoses Öl erhalten (Ausbeute 45 %).

Physikalische Daten:

IR (KBr): 3300 (NH); 2957, 2931, 2868 (CH); 1736 (CO); 1647, 1554, 1464, 1436, 1388 $cm^{-1}$.-$^1$H-NMR ($CDCl_3$):$\delta$ = 0.94 (t, 3H); 1.38 (d, 6H, m, 2H)); 1.60 (cm, 4H); 1.82 (cm, 2H); 2.40 (t, 2H); 2.64 (t, 2H); 2.68 (s, 3H); 3.08 (m, 1H); 3.15 (cm, 2H); 3.28 (cm, 2H); 4.06 (t, 2H); 5.80 (breit, 1H); 6.95 (d, 1H); 7.28 (cm, 1H); 7.40 (d, 1H); 7.62 (cm, 1H); 8.16 (bs, 1H) ppm.-$^{13}$C-NMR ($CDCl_3$):$\delta$ = 12.84; 13.62; 19.16; 24.72 (2C); 28.55; 29.90; 29.96; 30.80; 31.31; 37.67; 38.26; 39.53; 64.56; 112.34; 124.51; 125.32; 133.17; 135.14; 136.29, 136.44; 137.46; 139.85; 148.60; 171.40, 173.00 ppm.- MS: m/e = 411,6 ($C_{26}H_{37}N0_3^{\oplus}$).-

Beispiel 14

$L^1$: $-(CH_2)_3$-; $R^7$: $-(CH_2)_2$-CO-NH-$C(CH_3)_3$

Eine Lösung von 10,2 g (0,04 mol) 4-(7-Isopropyl-1-methylazulen-4-yl)-butylamin in 70 ml Dichlormethan wurde bei 0 °C mit 5,0 g (0,05 mol) Bernsteinsäureanhydrid versetzt und 2 h bei dieser Temperatur gerührt. Dann wurde eine Lösung von 10,3 g (0,05 mol) Dicyclohexylcarbodiimid in 10 ml Dichlormethan bei 0 °C zugetropft. Nach 30minütigem Rühren bei 0 °C wurden 7,3 g (0,1 mol) tert.-Butylamin zugegeben. Anschließend wurde weitere 30 Minuten bei 0 °C und dann 12 h bei Raumtemperatur gerührt.

Vom Niederschlag wurde abfiltriert, und das Filtrat wurde mit zunächst 2 N Salzsäure, dann mit 2 N Natronlauge und zum Schluß mit Wasser gewaschen. Die organische Phase wurde abgetrennt und über Natriumsulfat getrocknet. Der nach Abziehen des Lösungsmittels verbleibende Rückstand wurde an Kieselgel chromatographiert (Petrolether/Ethylacetat 1:1 v/v).

Es wurden 9,0 g des Zielproduktes als blaues Feststoff vom Schmelzpunkt 130-134 °C erhalten (Ausbeute 55 %).

Physikalische Daten:

IR (KBr): 3317, 3100 (NH); 2964, 2928 (CH); 1647; 1639 (CO); 1556, 1452, 1389, 1363, 1225 $cm^{-1}$.-$^1$H-NMR ($CDCl_3$):$\delta$ = 1.35 (s, 9H; d, 6H); 1.64 (m, 2H), 1.95 (m, 2H), 2.43 (cm, 4H), 2.66 (s, 3H); 3.08 (m, 1H); 3.15 (m, 2H); 3.28 (m, 2H); 6.10 (breit, 1H); 6.50 (breit, 1H); 6.98 (d, 1H); 7.25 (cm, 1H); 7.40 (d, 1H); 7.62 (d, 1H); 8.18 (s, 1H) ppm.-$^{13}$C-NMR ($CDCl_3$):$\delta$ = 12.86; 24.73 (2C); 28.83 (3C); 29.94; 32.15; 33.04; 33.11; 37.68; 38.23; 39.45; 51.09; 112.31; 124.51; 125.24; 133.15; 135.14; 136.20; 136.38; 137.38; 139.80, 148.63; 171.78; 172.43 ppm.-MS: m/e = 410,6 ($C_{26}H_{38}N_20_2^{\oplus}$).-

a4) Herstellung von Azulenen IId

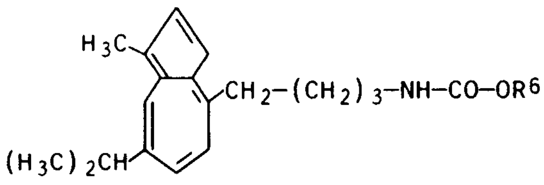

IId

Beispiel 15

$R^6$: $-C(CH_3)_3$
Eine Lösung von 12,8 g (0,05 mol) 4-(7-Isopropyl-1-methylazulen-4-yl)-butylamin in 50 ml Tetrahydrofuran wurde bei 0°C mit 12,0 g (0,055 mol) Dikohlensäuredi-tert.-butylester versetzt und anschließend 2 h bei Raumtemperatur gerührt.

Nach Zugabe von 30 ml 2 N Salzsäure und 50 ml Methyl-tert.-butylester wurde kräftig gerührt. Die organische Phase wurde dann abgetrennt und über Natriumsulfat getrocknet. Der nach Abziehen des Lösungsmittels verbleibende Rückstand wurde an Kieselgel chromatographiert (Methylenchlorid).

Es wurden 14,5 g des Zielproduktes als blaues Öl erhalten (Ausbeute 82 %).

Physikalische Daten:
IR (Film): 3360 (NH); 2960, 2931 (CH); 1698 (C=O); 1525, 1389, 1366, 1270, 1249, 1172 $cm^{-1}$.-$^1$H-NMR ($CDCl_3$):$\delta$=1.36 (d, 6H); 1.45 (s, 9H), 1.58 (cm, 2H), 1.84 (cm, 2H), 2.65 (s, 3H); 3.08 (m, 1H); 3.16 (m, 4H); 4.50 (breit, 1H); 6.95 (d, 1H); 7.28 (d, 1H); 7.38 (d, 1H); 7.62 (d, 1H); 8.18 (s, 1H) ppm.-$^{13}$C-NMR ($CDCl_3$)-:$\delta$=12.84; 24.71 (2C); 28.52 (4C); 30.42; 37.68; 38.23; 40.74; 79.02; 112.36; 124.50; 125.25; 133.10; 135.08; 136.27; 136.41; 137.44; 139.76, 148.66; 156.05 ppm.-MS: m/e = 355,5 ($C_{23}H_{33}N0_2^{\oplus}$).-

Beispiel 16

$R^6$: $-C_2H_5$
Herstellung und Isolierung erfolgten analog zu Beispiel 15.
Physikalische Daten:
IR (Film): 3340 (NH); 1700 (CO) $cm^{-1}$.-MS:m/e=327.5 ($C_{21}H_{29}NO_2^{\oplus}$).-

a5) Herstellung von Azulenen IIe

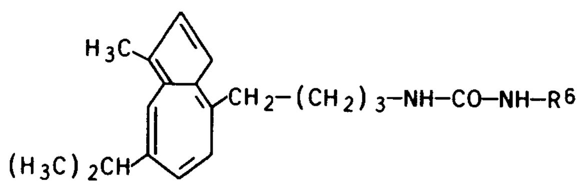

IIe

Beispiel 17

$R^6$: $-C_4H_9$
Eine Lösung von 12,8 g (0,05 mol) 4-(7-Isopropyl-1-methylazulen-4-yl)-butylamin (Beispiel 4) in 50 ml 1,1,1-Trichlorethan wurde mit 10 ml Butylisocyanat versetzt und anschließend 4 h unter Rückfluß erhitzt.

Der nach Abziehen des Lösungsmittels verbleibende Rückstand wurde an Kieselgel chromatographiert (Methylenchlorid/Aceton 9:1 v/v).

Es wurden 5,0 g des Zielproduktes als blaues Öl erhalten (Ausbeute 71 %).

Physikalische Daten:
IR (Film): 3338 (NH); 2957, 2929, 2863 (CH); 1631 (C=O); 1574, 1526, 1464, 1267, 1252 $cm^{-1}$.-$^1$H-NMR ($CDCl_3$):$\delta$=0.98 (t, 3H); 1.34 (d, 6H; m, 4H), 1.56 (cm, 2H), 1.85 (cm, 2H), 2.65 (s, 3H); 3.10 (m, 7H); 5.24 (breit, 2H); 6.94 (d, 1H); 7.25 (d, 1H); 7.34 (d, 1H); 7.58 (d, 1H); 8.18 (s, 1H) ppm.-$^{13}$C-NMR ($CDCl_3$)-:$\delta$=12.85; 13.77; 20.09; 24.70 (2C); 28.63; 30.80; 32.60; 37.77; 38.20; 40.13; 40.22; 112.32; 124.53; 125.19; 133.09; 135.14; 136.19; 136.34, 137.40; 139.76; 148.81; 159.20 ppm.-MS: m/e = 354,5 ($C_{23}H_{34}N_20^{\oplus}$).-

Beispiel 18

$R^6$: $-C(CH_3)_3$

Herstellung und Isolierung erfolgen analog zu Beispiel 17.

Physikalische Daten:
IR (Film): 3360 (N-H); 2960, 2929, 2886 (C-H); 1637 (C0); 1560, 1451, 1389, 1280, 1217 $cm^{-1}$.-MS: m/e = 354,5 ($C_{23}H_{34}N_20^{\oplus}$).-

a6) Herstellung von Azulenen IIf

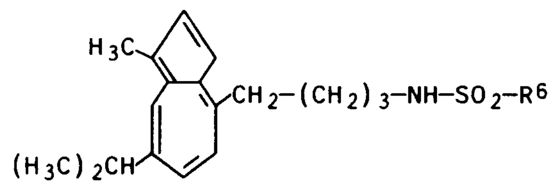

IIf

Beispiel 19

$R^6$: -Ph-4-$CH_3$

Eine Lösung aus 9,2 g (0,048 mol) p-Toluolsulfonsäurechlorid und 3,8 g (0,048 mol) Pyridin in 50 ml Dichlormethan wurde mit einer Lösung von 10,2 g (0,04 mol) 4-(7-Isopropyl-1-methylazulen-4-yl)-butylamin (Beispiel 4) versetzt und 12 h gerührt.

Anschließend wurde nach Ausschütteln mit 2 N Salzsäure die organische Phase abgetrennt, mit Wasser gewaschen und über Natriumsulfat getrocknet. Der nach Abziehen des Lösungsmittels verbleibende Rückstand wurde an Kieselgel chromatographiert (Dichlormethan/Aceton 8:2 v/v).

Es wurden 11,2 g des Zielproduktes als blaues Öl erhalten (Ausbeute 72 %).

Physikalische Daten:

IR (Film): 3300 (NH); 2957 (C-H); 1461, 1326, 1305, 1158, 1094, 1072, 815, 663, 551 $cm^{-1}$.- $^1H$-NMR ($COCl_3$): $\delta$ = 1,34 (d, 6H); 1,55 (mc, 2H); 1,80 (mc, 2H); 2,38 (s, 3H); 2,64 (s, 3H); 2,95 (mc, 2H); 3,08 (m, 3H); 4,55 (bs, 1H, NH); 6,92 (d, 1H); 7,20 (bs, 1H); 2,24 (d, 2H); 2,38 (d, 1H); 7,60 S, 1H); 7,72 (d, 2H); 8,15 (S, 1H) ppm.- MS: m/e = 409,6 ($C_{25}H_{31}NO_2S^{\oplus}$).-

b) Herstellung der Azulenquadratsäurefarbstoffe Ia

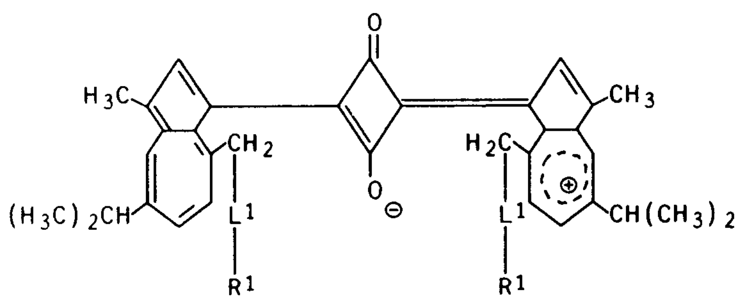

Ia

Beispiel 20

$L^1$: -$CH_2$-$CH(CH_3)$-; R1: -CN

Eine Mischung aus 2,65 g (0,01 mol) 2-Methyl-4-(7-isopropyl-1-methylazulen-4-yl)butyronitril (Beispiel 3), 1,0 g (0,087 mol) Quadratsäure, 40 ml n-Butanol und 40 ml Toluol wurde am Wasserabscheider 2 h unter Rückfluß erhitzt.

Der nach Abdestillieren des Lösungsmittels verbleibende Rückstand wurde an Kieselgel chromatographiert (Dichlormethan/Ethylacetat 8:2 v/v) und anschließend aus Ethylacetat/Petrolether (2:1 v/v) umkristallisiert.

Es wurden 1,1 g des Zielproduktes als metallisch glänzende Kristalle vom Schmelzpunkt 214-215 °C erhalten (Ausbeute 36 %).

Physikalische Daten:

IR (KBr): 2960, 2930, 2865 (C-H); 2240 (C≡N); 1569, 1427, 1385, 1332, 1322, 1243, 1021 $cm^{-1}$. -

KV ($CH_2Cl_2$): $\lambda_{max.}$ ($\epsilon$) = 772 (1130 000) nm, $^1H$-NMR ($CDCl_3$): $\delta$ = 1,23 (d, 6H), 1,49 (d, 12H); 1,89 (mc, 2H); 2,55 (bs, 8H); 3,12 (mc, 2H); 4,10 (mc, 4H); 7,48 (d, 2H); 7,62 (d, 2H); 8,12 (bs, 2H); 8,92 (b, 2H) ppm. - $^{13}C$-NMR ($CDCl_3$): $\delta$ = 12,97 (2c); 18,05 (2c); 24,21 (4c); 25,42 (2); 36,11 (2c); 37,39 (2c); 38,40 (2c); 121,61 (2c); 122,69 (2c); 131,20 (2c); 134,24 (2c); 134,43 (2c); 138,42 (2c); 140,27 (2c); 141,87 (2c); 147,86 (2c); 150,74 (2c); 154,42 (2c); 181,82 (2c); 183,09 (2c) ppm. - MS: m/e = 608,7 ($C_{42}H_{44}N_2O_2^{+}$, 70 %)

Beispiele 21 bis 32

Auf analoge Weise zu Beispiel 20 wurden diese Azulenquadratsäurefarbstoffe Ia durch Umsetzung der Azulenderivate II mit Quadratsäure hergestellt.

In Tabelle 2 sind die jeweiligen Farbstoffe Ia mit ihren $\lambda_{max}$- und $\epsilon$-Werten (gemessen in Methylenchlorid) und ihren Schmelzpunkten aufgeführt.

Tabelle 2

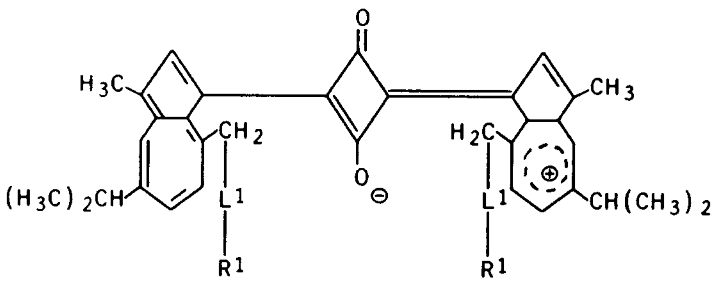

Ia

| Bsp. | $L^1$ | $R^1$ | λmax(ε) $CH_2Cl_2$ | Schmp. [°C] |
|---|---|---|---|---|
| 21 | $-(CH_2)_3-$ | $-NH-CO-CH_3$ | 768 (139 000) | 207-208 |
| 22 | $-(CH_2)_3-$ | $-NH-CO-Ph$ | 775 (113 000) | 121-123 |
| 23 | $-(CH_2)_3-$ | $-NH-CO-C_4H_9$ | 764 (131 000) | 199-200 |
| 24 | $-(CH_2)_3-$ | $-NH-CO-CH=CH-CH=CH-CH_3$ | 774 (105 000) | 169-173 |
| 25 | $-(CH_2)_3-$ | $-NH-CO-C(CH_3)_3$ | 772 (120 686) | 218-219 |
| 26 | $-(CH_2)_4-$ | $-NH-CO-CH_3$ | 766 (96 000) | 198-199 |
| 27 | $-(CH_2)_3-$ | $-NH-CO-(CH_2)_3-O-CO-NH-C(CH_3)_3$ | 770 (94 000) | Öl |
| 28 | $-(CH_2)_3-$ | $-NH-CO-(CH_2)_2-CO-O-C_4H_9$ | 770 (118 000) | 148-150 |
| 29 | $-(CH_2)_3-$ | $-NH-CO-(CH_2)_2-CO-NH-C(CH_3)_3$ | 768 (106 000) | 197-201 |
| 30 | $-(CH_2)_3-$ | $-NH-CO-O-C(CH_3)_3$ | 770 (119 000) | 202-204 |
| 31 | $-(CH_2)_3-$ | $-NH-CO-O-C_2H_5$ | 772 (102 000) | 132-135 |
| 32 | $-(CH_2)_3-$ | $-NH-SO_2-Ph-4-CH_3$ | 769 (140 000) | 199-200 |

c) Anwendungsbeispiele

Beispiel 33

Eine etwa 5 gew.-%ige Lösung des Farbstoffs aus Beispiel 21 in Toluol wurde mit einer Spritze bei ca. 2000 U/min auf eine rotierende Polymethylmethacrylatscheibe aufgetragen. Dann wurde das restliche Lösungsmittel bei 5000 U/min abgeschleudert.

Man erhielt eine homogene, hochreflektierende Farbstoffschicht, welche sich mit einem Halbleiterlaser ($\lambda$ = 830 nm) sehr gut beschreiben ließ. Die Informationen konnten mit sehr gutem Kontrast wieder ausgelesen werden.

Beispiel 34

Eine 3 gew.-%ige Lösung des Farbstoffs aus Beispiel 21, welche bezogen auf den Gehalt an gelöstem Feststoff, 20 Gew.-% Polymethylmethacrylat enthielt, wurde analog zu Beispiel 33 auf eine gerillte Polycarbonatscheibe aufgeschleudert.

Man erhielt eine homogene, hochreflektierende Farbstoffschicht, die auf dem Substrat gut haftete, die Spurrillen des Substrates gut abbildete und mit einem Halbleiterlaser ($\lambda$ = 830 nm) sehr gut beschreibbar war. Die eingeschriebene Informationen war im Klimatest stabil und konnte mit gutem Kontrast beliebig oft wieder ausgelesen werden.

Beispiel 35

Eine 2 gew.-%ige Lösung des Farbstoffs aus Beispiel 21 in Propanol/Diacetonalkohol (1:1 v/v), welche, bezogen auf den Gehalt an gelöstem Feststoff, 10 Gew.-% eines Phenolharzes als Bindemittel und 5 Gew.-% 4-Octyl-4'-fluor-diphenyl-dithiolennickel als Stabilisator enthielt, wurde analog zu Beispiel 33 auf eine gerillte Polycarbonatscheibe aufgeschleudert.

Die erhaltene Speicherschicht war derjenigen aus Beispiel 34 in allen Belangen vergleichbar, wies aber eine erhöhte Stabilität gegenüber UV-Licht auf.

Beispiel 36

Eine 2 gew.-%ige Lösung des Farbstoffs aus Beispiel 21 in Toluol, welche, bezogen auf den Gehalt an gelöstem Feststoff, 10 Gew.-% Polymethylmethacrylat und 5 Gew.-% Biscampheratodithiolennickel enthielt, wurde analog Beispiel 33 auf eine Glasscheibe aufgeschleudert.

Die erhaltene Farbstoffschicht war homogen und zeigte eine hohe Grundreflektivität. Sie konnte mit einem Halbleiterlaser ($\lambda$ = 780 nm) gut beschrieben werden. Die eingeschriebenen Informationen waren unter den üblichen Testbedingungen stabil und konnten beliebig oft wieder ausgelesen werden.

## Patentansprüche

**1.** Aulenquadratsäurefarbstoffe der allgemeinen Formel I

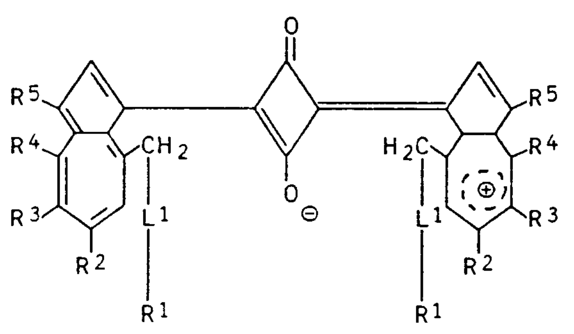

I

in der

| | |
|---|---|
| $L^1$ | $C_1$-$C_{12}$-Alkylengruppen, die durch Phenyl substituiert sein können, bedeutet; |
| $R^1$ | für Reste der Formeln |
| | -CN, -NH-CO-OR$^6$, -NH-CO-NH-R$^6$, -NH-SO$_2$-R$^6$ oder -NH-CO-R$^7$ |
| | steht, wobei |
| $R^6$ | $C_1$-$C_{12}$-Alkyl, $C_2$-$C_{12}$-Alkenyl, $C_5$-$C_7$-Cycloalkyl oder Phenyl, das durch $C_1$-$C_4$-Alkyl, $C_1$-$C_4$-Alkoxy oder Halogen substituiert sein kann, bedeutet und |

| | |
|---|---|
| $R^7$ | für einen der Reste $R^6$ oder einen der Reste der Formeln $-L^2-CO-OR^{6'}$, $-L^2-CO-NH-R^{6'}$ oder $-L^2-O-CO-NH-R^{6'}$ steht, wobei |
| $L^2$ | $C_1-C_{12}$-Alkylengruppen bedeutet und |
| $R^{6'}$ | einen der Alkylreste $R^6$ bezeichnet; |
| $R^2$, $R^3$, $R^4$ und $R^5$ | gleich oder verschieden sind und unabhängig voneinander jeweils für Wasserstoff oder $C_1-C_{12}$-Alkylgruppen stehen, die folgende Substituenten tragen können: Halogen, Cyano, $C_1-C_{12}$-Alkoxy, $C_1-C_{12}$-Alkoxycarbonyl oder Phenyl, das durch $C_1-C_4$-Alkyl, $C_1-C_4$-Alkoxy oder Halogen substituiert sein kann, |

mit der Maßgabe, daß die Ringpositionen der Substituenten $-CH_2-L^1-R^1$ und $R^4$ gegeneinander vertauscht sein können, wenn $R^5$ Wasserstoff bedeutet.

**2.** Azulenquadratsäurefarbstoffe der allgemeinen Formel I nach Anspruch 1, in der $R^2$, $R^3$, $R^4$ und $R^5$ jeweils $C_1-C_6$-Alkyl oder Wasserstoff bedeuten.

**3.** Azulenquadratsäurefarbstoffe der allgemeinen Formel I nach Anspruch 1, in der $R^2$ und $R^4$ Methyl und $R^3$ und $R^5$ Wasserstoff bedeuten.

**4.** Azulenquadratsäurefarbstoffe der allgemeinen Formel 1 nach Anspruch 1, in der $R^2$ und $R^4$ Wasserstoff, $R^3$ Isopropyl und $R^5$ Methyl bedeuten.

**5.** Optische Aufzeichnungsmedien für die Aufzeichnung und Wiedergabe von Informationen mittels Laserstrahlen, enthaltend in der lichtempfindlichen Schicht einen Azulenquadratsäurefarbstoff der Formel I gemäß den Ansprüchen 1 bis 3.

**6.** Azulene der allgemeinen Formel II

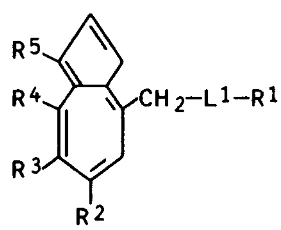

II

in der

| | |
|---|---|
| $R^1$ | für Reste der Formeln $-CN$, $-NH_2$, $-NH-CO-OR^6$, $-NH-CO-NH-R^6$, $-NH-SO_2-R^6$ oder $-NH-CO-R^7$ steht, wobei $R^6$ $C_1-C_{12}$-Alkyl, $C_2-C_{12}$-Alkenyl, $C_5-C_7$-Cycloalkyl oder Phenyl, das durch $C_1-C_4$-Alkyl, $C_1-C_4$-Alkoxy oder Halogen substituiert sein kann, bedeutet und |
| $R^7$ | für einen der Reste $R^6$ oder einen der Reste der Formeln $-L^2-CO-OR^{6'}$, $-L^2-CO-NH-R^{6'}$ oder $-L^2-O-CO-NH-R^{6'}$ steht, wobei |
| $L^2$ | $C_1-C_{12}$-Alkylengruppen bedeutet und |
| $R^6$ | ' einen der Alkylreste $R^6$ bezeichnet; |
| $L^1$ | $C_1-C_{12}$-Alkylengruppen, die durch Phenyl substituiert sein können, oder für den Fall, daß $R^1$ für -CN steht, zusätzlich eine chemische Bindung bedeutet; |
| $R^2$, $R^3$, $R^4$ und $R^5$ | gleich oder verschieden sind und unabhängig voneinander jeweils für Wasserstoff oder $C_1-C_{12}$-Alkylgruppen stehen, die folgende Substituenten tragen können: Halogen, Cyano, $C_1-C_{12}$-Alkoxy, $C_1-C_{12}$-Alkoxycarbonyl oder Phenyl, das durch $C_1-C_4$-Alkyl, $C_1-C_4$-Alkoxy oder Halogen substituiert sein kann. |

Europäisches
Patentamt

# EUROPÄISCHER RECHERCHENBERICHT

Nummer der Anmeldung

EP 91 12 0612

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A<br><br><br>D | EP-A-0 310 080 (BASF)<br>* Seite 3, Zeile 16 - Zeile 52 *<br>* Seite 5, Zeile 57 *<br>& DE-A-3 733 173<br>--- | 1-6 | C09B57/00<br>G11B7/24<br>C07C253/30 |
| A | CHEMISCHE BERICHTE.<br>Bd. 100, Nr. 2, 1967, WEINHEIM DE<br>Seiten 375 - 382;<br>SCHOLZ ET AL: 'Ueber die Darstellung des 4-Styryl-azulens .....'<br>* Seite 381Tabelle 4 *<br>----- | 1,6 | |
| | | | **RECHERCHIERTE SACHGEBIETE (Int. Cl.5 )** |
| | | | C09B<br>G11B<br>C07C |

Der vorliegende Recherchenbericht wurde für alle Patentansprüche erstellt

| Recherchenort | Abschlußdatum der Recherche | Prüfer |
|---|---|---|
| DEN HAAG | 03 APRIL 1992 | DAUKSCH H.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes Dokument